# EUROPÄISCHE PATENTSCHRIFT

(11) **EP 0 917 848 B1**
(45) Veröffentlichungstag und Bekanntmachung des Hinweises auf die Patenterteilung: **20.08.2003**
(21) Anmeldenummer: 98121727.6
(22) Anmeldetag: 14.11.1998
(51) Int. Cl.: A47J 43/18

(54) **Rouladen-Klammer**
Roulade clamps
Pinces pour roulades

(30) Priorität: 21.11.1997 DE 29720684 U
(43) Veröffentlichungstag der Anmeldung: 26.05.1999
(73) Patentinhaber: Rudolf Eckel Federnfabrik GmbH, 57368 Lennestadt-Oberelpse (DE)
(72) Erfinder: Geisler, Andreas, 57439 Attendorn (DE)
(74) Vertreter: Grosse, Wolf-Dietrich, Dipl.-Ing.

(56) Entgegenhaltungen:
- EP-A- 0 124 637
- DE-B- 1 292 337
- DE-U- 29 607 574
- US-A- 3 374 026
- US-A- 4 200 040

## Beschreibung

Die Erfindung betrifft eine aus Federdraht gebogene Rouladen-Klammer mit mittels eigebogener Federn gegeneinander vorgespannten Schenkeln. Beim Anfertigen von Rouladen werden dünne Scheiben von Fleisch, oder Blätter von Kohl mit Speck, Gurke, Gehackten und dergleichen versehen, und nach dem Zusammenrollen geschmort oder gedünstet. Hierbei ist darauf zu achten, daß der Wickel sich nicht lockert oder sogar entrollt. Üblich ist es, die fertiggestellte Roulade mit Garn zu umwickeln oder durch einen quer hindurchgesteckten Spieß zu sichern. Das Umbinden mit Garn erweist sich bereits bei der Herstellung als umständlich und erfordert vor dem Verzehren ein Abwickeln in heißem Zustand, das Geschicklichkeit erfordert, sich als zeitraubend erweist und die Gefahr von Verschmutzungen und Verbrennungen birgt. Der quer hindurchzusteckende Rouladen-Spieß erweist sich zwar in der Handhabung als einfach, die Rouladen sind jedoch durch Verletzungen der Fleisch-Scheibe bzw. der Kohlblätter z. B. durch mindestens teilweises Aufrollen gefährdet.

Es sind schon unterschiedliche, aus Federdraht oder Blattfedern hergestellte Rouladen-Klammern nach der vorangestellten Gattung bekannt. Bei einer dieser Klammern wird ein einfacher Federdrahtabschnitt verwendet und zu zwei Paaren von Schenkeln geformt, die jeweils durch die Schenkel vorspannende Federgelenke miteinander verbunden sind, und bei denen jeweils die Enden zweier Schenkel der Schenkelpaare durch horizontal abgekantete Drähte miteinander in Verbindung stehen. Ähnliche Klammern lassen sich auch aus Bandstahl herstellen. Hier ist der Bandstahl rundlich geformt und stellt somit zwei ineinander übergehende Schenkel dar. Nach Aufbiegen wird die Klammer über die Roulade gesteckt und federt zurück. Zusätzlich können an den freien Enden Verschlußelemente in Form von Haken und Öse oder Haken und Widerhaken vorgesehen sein, die ineinander hakbar sind. Beiden Rouladen-Klammern ist gemeinsam, daß bereits das Anbringen der Klammer relativ schwierig ist und einer nicht unerheblichen Geschicklichkeit bedarf, während das Entfernen nach dem Schmoren oder Dünsten sich als äußerst schwierig erweist, da diese Klammern ja an Teilen derselben zu ergreifen und abzuheben sind, die direkt auf dem heißen, soeben geschmorten Fleisch aufliegen.

Die DE 12 92 337 B offenbart zwar bereits eine Rouladen-Klammer, welche eine Handhabe aufweist, dies ist jedoch aus drei unterschiedlichen Drahtelementen aufwendig und kompliziert zusammen gesetzt. Hinzu kommt, daß es sich um eine Doppelklammer handelt, so daß sich insgesamt nur eine kompliziert herstellbare und aufwendig bedienbare Rouladen-Klammer ergibt.

Die Erfindung geht daher von der Aufgabe aus, eine gattungsgemäße Rouladen-Klammer zu schaffen, die leicht herstellbar, aber insbesondere leicht bedienbar ist, d. h. die sowohl leicht anzulegen ist als auch später von der heißen Roulade derart leicht abzunehmen ist, daß Verbrennungen und/oder Verschmutzungen ebenso vermieden werden, wie umständliche Erfassungsversuche der Schenkelenden.

Gelöst wird die Erfindung mit den Merkmalen des Anspruches 1. Durch diese Merkmale werden die Schenkel der Klammer abgewinkelt über den eigentlichen Schwenkpunkt der Feder hinaus verlängert, so daß eine der Bedienung leicht zugängige Handhabe geschaffen wird. Mit ihrer Hilfe ist es möglich, die Klammer zu öffnen, ohne in direkten Kontakt mit der eigentlichen Roulade zu kommen.

Zweckmäßige, vorteilhafte und erfinderische Weiterbildungen sowie Alternativen sind in den Unteransprüchen gekennzeichnet.

Im einzelnen sind die Merkmale der Erfindung anhand der Beschreibung eines Ausführungsbeispiels in Verbindung mit dieses darstellenden Zeichnungen erläutert. Es zeigen hierbei:
- Figur 1: eine Ansicht einer Rouladen-Klammer, und
- Figur 2: eine leicht schräg dargestellte Seitenansicht der Rouladen-Klammer nach Fig. 1.

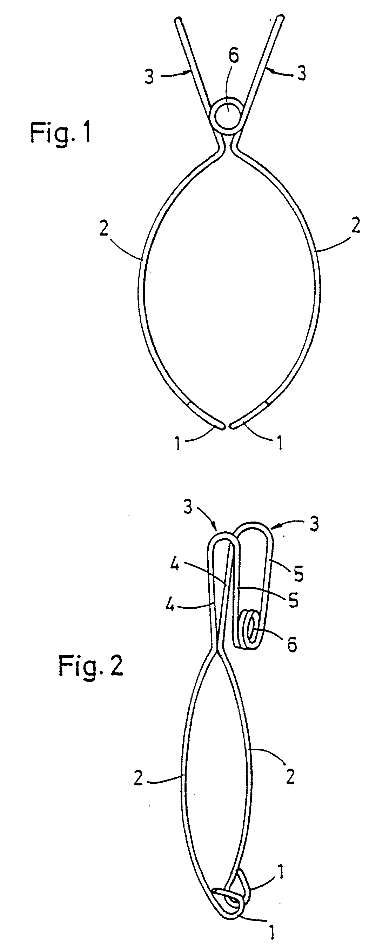

In den Figuren ist eine Rouladen-Klammer dargestellt, die aus einem einzigen Abschnitt eines Federdrahtes hergestellt ist, wobei unter Federdraht alle länglichen Abschnitte eines elastischen Materiales verstanden werden, bspw. Edelstahl, Stahl, aber auch Eisen, Messing, Bronze und gegebenenfalls sogar Kunststoff. Der Querschnitt ist hierbei beliebig; er kann ein Polyeder sein, so daß der Querschnitt ein zweckmäßig regelmäßiges Dreieck, ein Quadrat, ein Rechteck, aber auch ein beliebiger Polyeder ebenso sein kann wie er runde oder elliptische Form aufweisen kann. Der Abschnitt ist so gebogen, daß seine Enden zu kleinen Ösen 1 ausgebogen sind. Die an diese Ösen 1 anschließenden Abschnitte sind als die Rouladen umgreifende Schenkel 2 durchgekrümmt und an ihrem oberen, dem Verbindungsbereich, zu Handhaben 3 abgekantet. Diese Handhaben 3 bilden mit dem jeweils anschließenden Schenkel 2 doppelarmige Hebel, wobei die Handhaben mit einem Winkel divergieren, der von 20 bis 120° variieren kann und im Ausführungsbeispiel etwa 35 bis 40° beträgt. Die Handhaben sind, wie insbesondere Fig. 2 zeigt, an ihrem freien Schenkelende etwa U-förmig abgekantet und verlaufen parallel zu ihrem direkt an die Schenkel 2 anschließenden Abschnitt 4 zu dem eigentlichen Gelenkpunkt hin, der durch einen die Parallelabschnitte 5 verbindenden vorspannenden Gelenk führt, das als Schraubenlinienfeder 6 ausgebildet ist.

Die Bedienung ist durch die angebogenen Handhaben 3 sehr einfach. Zum Anlegen der Rouladen-Klammern werden, bspw. mit Daumen und Zeigefinger einer Hand, die Handhaben aufeinander zu gedrückt, wobei gleichzeitig die Schenkel 2 sich öffnen und über die Roulade geschoben werden können. Ein Freigeben der Handhaben 3 bewirkt auch gleichzeitig ein Schließen der Schenkel 2 der Rouladen-Klammer, die sich fest an den Umfang der Rouladen legen und ein Aufwickeln der Rouladen verhindern.

Nach dem Garen, d.h. Schmoren oder Dünsten, läßt sich die Rouladen-Klammer ohne Schwierigkeiten von der heißen Roulade abnehmen, da die Handhaben ja von derselben abstehen und damit leicht faßbar sind, und da sie von der Roulade abstehen, können die Handhaben 3 auch leicht abtropfen und sich soweit abkühlen, daß sie entfernbar sind. Auch hier genügen wieder Zeigefinger und Daumen einer Hand, um die Handhaben zu umfassen und gegeneinanderzupressen, so daß die Schenkel der Klammer sich öffnen und die Roulade freigegeben wird.

Es sind eine ganze Reihe von Abwandlungen des Ausführungsbeispieles möglich, ohne daß das Wesen der Erfindung verlassen wird. Zunächst einmal können Drähte beliebigen Querschnitts verwendet werden, und es ist auch möglich, relativ flache Rechtecke wie bspw. Blattfedern zu verwenden. Auch das Material spielt keine wesentliche Rolle; erheblich ist nur, daß es sich um ein festes und, sofern es die Feder betrifft, elastisches Material handelt. So können Edelstähle, Stähle und gar nur relativ wenig Kohlenstoff enthaltendes Eisen ebenso verwendet werden wie zweckmäßig hartgezogenes Messing oder Bronze. Selbst Kunststoff läßt sich verwenden. Es kann auf jeden Fall bei Metallen, falls erforderlich, ein zusätzlicher Schutz benutzt werden. So kommen bspw. die Feuerverzinkung in Frage, aber auch das galvanische Auftragen von Zink, Chrom, Nickel oder dergleichen ist möglich. Ferner kann zur Verhinderung von Oxidationen eine Kunststoffbeschichtung aufgetragen werden.

Die Rouladen-Klammer ist auch in bezug auf Aufbau und Ausgestaltung nicht auf das klargestellte Ausführungsbeispiel angewiesen. Wesentlich ist nur, daß doppelarmige Hebel verwendet werden, deren einer Arm jeweils als Schenkel 2 dient, während der andere als Handhabe 3 ausgebildet ist. Diese Hebel sind schwenkbar miteinander derart zu verbinden, daß die Handhaben im Ausgangszustande divergieren, und mittels einer Feder werden die Schenkel zusammengehalten und die Handhaben gespreizt. Im Prinzip könnte auch eine Art Wäscheklammer mit gekrümmtem längeren Schenkel und nach außen abgebogenem Handhaben-Schenkel verwendet werden, wobei die Feder, wie bei Wäscheklammern üblich, vorgesehen sein kann oder schlichtweg als Druckfeder zwischen den Handhaben 3 angeordnet ist.

Es ist auch möglich, jeweils Rouladen-Klammern miteinander zu kuppeln. Im einfachsten Falle werden zwei dem Ausführungsbeispiel entsprechende Klammern durch einen Bolzen, der ihre Schraubenlinienfedern 6 durchgreift, miteinander verbunden. Es ist aber auch möglich, eine Kupplung durch ein Rohr und einem dieses durchgreifenden zweiten Rohr geringeren Durchmessers oder einen entsprechenden Bolzen derart zu bewirken, daß bspw. das Rohr mit den zur einen Seite liegenden Schenkeln verbunden wird und die aus dem umhüllenden Rohr auskragenden Enden des Rohres geringeren Durchmessers oder des Bolzens mit den jeweils gegenüberliegenden Schenkeln. Nun ist es nur noch erforderlich, Rohr und Innenrohr bzw. Bolzen mit den Handhaben auszustatten und eine entsprechende Feder vorzusehen, die an die Handhaben angreifen kann oder auch nur auf Rohr und Innenrohr. In jedem dieser Fälle ergibt sich eine, wie gewünscht, leicht bedienbare und leicht herstellbare Rouladen-Klammer, die ohne Probleme benutzbar ist.

Es hat sich gezeigt, daß die erfindungsgemäße "Rouladen-Klammer" auch anderweitig verwendbar ist. So können andere gewickelte Gegenstände wie Filme, Zeichnungen oder dergleichen durch diese Klamma am Abrollen gehindert werden und es können auch Bündel gestreckter Gegenstände zusammengehalten werden.

## Patentansprüche

1. Aus Federdraht gebogene Rouladen-Klammer mit mittels eingebogener Federn gegeneinander vorgespannten Schenkeln,
**dadurch gekennzeichnet,**
**daß** die Schenkel (2) als zweiarmige Hebel (Schenkel 2, Handhabe 3) ausgebildet und über ihren Schwenkpunkt hinaus durch die divergierenden Handhaben (3) verlängert sind.

2. Rouladen-Klammer nach Anspruch 1,
**dadurch gekennzeichnet,**
**daß** an die aufeinander zu führenden Enden der Schenkel (2) sich abgekantete, um einen Winkel von 20 bis 120° divergierende Handhaben anschließen, und daß der an deren Enden U-förmig zurückgebogene Draht (Parallelabschnitt 5) jeweils zur Feder (Schraubenlinienfeder 6) führt.

3. Rouladen-Klammer nach Ansprüchen 1 oder 2,
**dadurch gekennzeichnet,**
**daß** die Feder eine Torsionsfeder ist.

4. Rouladen-Klammer nach mindestens einem der Ansprüche 1 bis 3,
**dadurch gekennzeichnet,**
**daß** die Feder eine Schraubenlinienfeder ist.

5. Rouladen-Klammer nach mindestens einem der Ansprüche 1 bis 4,
**gekennzeichnet durch**
Verwendung von Edelstahldraht dreieckigen, quadratischen, rechteckigen, polygonartigen, runden, elliptischen Querschnitts oder dergleichen.

6. Rouladen-Klammer nach mindestens einem der Ansprüche 1 bis 4,
**gekennzeichnet durch**
Verwendung von Messing- oder Bronzedraht dreieckigen, quadratischen, rechteckigen, polygonförmigen, runden, elliptischen Querschnitts oder dergleichen.

7. Rouladen-Klammer nach einem der Ansprüche 1 bis 4,
**gekennzeichnet durch**
Verwendung eines Eisen- bzw. Stahldrahtes dreieckigen, quadratischen, rechteckigen, rundem, elliptischem , blattförmigen Querschnitts oder dergleichen.

8. Rouladen-Klammer nach mindestens einem der Ansprüche 1 bis 4,
**gekennzeichnet durch**
Verwendung von Leichtmetall, Leichtmetallegierungen oder dergleichen dreieckigen, quadratischen, rechteckigen, runden, elliptischen oder blattförmigen Querschnitts oder dergleichen.

9. Rouladen-Klammer nach mindestens einem der Ansprüche 1 bis 8,.
**gekennzeichnet durch**,
Oberflächenbehandlung oder -beschichtung wie Brünieren, Eloxieren, Verzinken, Verchromen, Vernickeln und/oder Kunststoffbeschichten des Federdrahtes.

10. Rouladen-Klammer nach mindestens einem der Ansprüche 1 bis 9,
**dadurch gekennzeichnet,**
**daß** mehrere, vorzugsweise zwei, Klammern durch Rohre und/oder Bolzen miteinander verbunden sind.

11. Rouladen-Klammer nach mindestens einem der Ansprüche 1 bis 10,
**gekennzeichnet durch**
die Anwendung zur Verhinderung des Abrollens gewickelter Gegenstände und/oder zum Zusammenhalten von Bündeln, vorzugsweise gestreckter Gegenstände.

## Claims

1. A clamp for meat rolls which is bent out of spring wire and comprises limbs that are prestressed relative to one another by means of integral springs,
**characterized by** the fact
that the limbs (2) are realized in the form of two-armed levers (limbs 2, handles 3) and extended beyond their pivoting point in the form of the diverging handles (3).

2. The clamp for meat rolls according to Claim 1,
**characterized by** the fact
that the converging ends of the limbs (2) are followed by angled handles that diverge by an angle between 20 and 120°, and by the fact that the wire that is bent back in the shape of a U at the ends of the handles (parallel section 5) respectively leads to the spring (helical spring (6).

3. The clamp for meat rolls according to Claim 1 or 2,
**characterized by** the fact
that the spring consists of a torsion spring.

4. The clamp for meat rolls according to at least one of Claims 1-3,
**characterized by** the fact
that the spring consists of a helical spring.

5. The clamp for meat rolls according to at least one of Claims 1-4,
**characterized by**
the utilization of special steel wire of triangular, square, rectangular, polygonal, round, elliptical cross section or the like.

6. The clamp for meat rolls according to at least one of Claims 1-4,
**characterized by**
the utilization of brass or bronze wire of triangular, square, rectangular, polygonal, round, elliptical cross section or the like.

7. The clamp for meat rolls according to one of Claims 1-4,
**characterized by**
the utilization of an iron or steel wire of triangular, square, rectangular, round, elliptical, foliar cross section or the like.

8. The clamp for meat rolls according to at least one of Claims 1-4,
**characterized by**
the utilization of light metals, light metal alloys or the like of triangular, square, rectangular, round, elliptical or foliar cross section or the like

9. The clamp for meat rolls according to at least one of Claims 1-8,
**characterized by**
a surface treatment or coating, e.g., by subjecting the spring wire to a varnishing, anodizing, zinc-plating, chromium-plating, nickel-plating and/or plastic-coating process.

10. The clamp for meat rolls according to at least one of Claims 1-9,
**characterized by** the fact
that several clamps, preferably two clamps, are connected to one another by means of tubes and/or bolts.

11. The clamp for meat rolls according to at least one of Claims 1-10,
**characterized by**
its utilization for preventing coiled objects from unrolling and/or for holding together bundles of preferably prolate objects.

## Revendications

1. Pince à roulades courbée en fil métallique à ressort comportant des branches précontraintes l'une à l'encontre de l'autre au moyen de ressorts recourbés vers l'intérieur,
**caractérisée en ce que**
les branches (2) sont conçues comme des leviers à deux bras (branche 2, prise 3) et prolongées au delà de leur centre de gravité par les prises divergentes (3).

2. Pince à roulades selon la revendication 1,
**caractérisée en ce que**
aux extrémités des branches (2) à guider l'une vers l'autre se raccordent des prises biseautées divergeant d'un angle de 20 à 120° et que le fil métallique replié en forme de U à leurs extrémités (section parallèle 5) mène respectivement au ressort (ressort hélicoïdal 6).

3. Pince à roulades selon les revendications 1 ou 2,
**caractérisée en ce que**
le ressort est un ressort de torsion.

4. Pince à roulades selon au moins une des revendications 1 à 3,
**caractérisée en ce que**
le ressort est un ressort hélicoïdal.

5. Pince à roulades selon au moins une des revendications 1 à 4,
**caractérisée par**
l'utilisation de fil en acier inoxydable à section transversale triangulaire, carrée, rectangulaire, polygonale, ronde, elliptique ou similaire.

6. Pince à roulades selon au moins une des revendications 1 à 4,
**caractérisée par**
l'utilisation de fil de laiton ou de bronze à section transversale triangulaire, carrée, rectangulaire, polygonale, ronde, elliptique ou similaire.

7. Pince à roulades selon une des revendications 1 à 4,
**caractérisée par**
l'utilisation de fil fer ou d'acier à section transversale triangulaire, carrée, rectangulaire, ronde, elliptique, en forme de lame ou similaire.

8. Pince à roulades selon au moins une des revendications 1 à 4,
**caractérisée par**
l'utilisation de métal léger, d'alliages de métaux légers ou similaires à section transversale triangulaire, carrée, rectangulaire, ronde, elliptique ou en forme de lame ou similaire.

9. Pince à roulades selon au moins une des revendications 1 à 8,
**caractérisée par**
un revêtement ou un traitement de surface comme le brunissage, l'anodisation, le zingage, le chromage, le nickelage et/ou l'enrobage en matière plastique du fil métallique à ressort.

10. Pince à roulades selon au moins une des revendications 1 à 9,
**caractérisée en ce que**
plusieurs, de préférence deux, pinces sont reliées l'une à l'autre par des tubes et/ou des chevilles.

11. Pince à roulades selon au moins une des revendications 1 à 10,
**caractérisée par**
l'utilisation, aux fins d'empêcher le déroulement d'objets enroulés et/ou de maintenir ensemble des assemblages, d'objets de préférence allongés.
